# EUROPEAN PATENT APPLICATION

(11) **EP 3 176 745 A1**
(43) Date of publication of application: **07.06.2017**
(21) Application number: 15826337.6
(22) Date of filing: 15.05.2015
(51) Int. Cl.: G06Q 30/06

(54) **MATCHING SERVER, MATCHING SYSTEM, AND MATCHING METHOD**

(30) Priority: 31.07.2014 JP 2014155782
(71) Applicant: Fujifilm Corporation, Minato-ku Tokyo 106-8620 (JP)
(72) Inventor: YONAHA, Makoto, Tokyo 107-0052 (JP)
(74) Representative: Klunker . Schmitt-Nilson . Hirsch
(86) International application number: PCT/JP2015/064083
(87) International publication number: WO 2016/017242

(57) **Abstract**

An object of the present invention is to provide a coordination server, a coordination system, and a coordination method capable of reflecting an intention of a providing source of a first product in search for a second product to be combined with the first product. In a preferred aspect of the present invention, a coordination server (10) is a coordination server (10) that performs coordination of a second product for a first product, and includes a coordination condition acquisition unit (25) that acquires a coordination condition that is information on a product that is combinable with the first product, which is set by a providing source of the first product, and a product group generation unit (27) that generates a first product group consisting of candidate products of the second product on the basis of the coordination conditions.

## Description

### BACKGROUND OF THE INVENTION

### 1. Field of the Invention

The present invention relates to a coordination server, a coordination system, and a coordination method and, particularly, to a coordination server, a coordination system, and a coordination method that search for a coordination product from a product group handled in an electronic commerce (EC).

### 2. Description of the Related Art

When a product such as an apparel is purchased in an electronic commerce site (EC site) on the Internet, a user (consumer) may purchase a product in consideration of a combination (coordination) in which two or more types of product are coordinated.

Conventionally, images obtained by imaging products (hereinafter also referred to as "product images") are displayed on an electronic terminal, and respective products is selected so that two or more products are coordinated.

Further, preset recommended products are provided to the user.

For example, JP2008-282098A discloses a technology for specifying a recommended product from a product group on the basis of correlation information between products and providing a user with the recommended product.

Further, a technology for enabling a user to efficiently search for a desired product from a product group has been conventionally considered.

For example, JP2010-39592A discloses a technology for searching for a product in consideration of a search condition regarding "brand", "price", or "category" when the product is searched for.

### SUMMARY OF THE INVENTION

However, in the technologies described in JP2008-282098A and JP2010-39592A, in a case where coordination of products is performed, it is not considered that a user is caused to perform search in which an intention of a providing source (an EC site or a supplier) of products is reflected. That is, in the technologies of JP2008-282098A and JP2010-39592A, it is not considered that a providing source of products limits a range of search of products performed by the user.

In many cases, a providing source of products in actual commerce has an intention to limit search of products to be performed by users in consideration of a relationship with a product sales strategy or competitors. For example, users who consider purchasing bottoms to be combined with tops of products available from their company include providing sources having an intention to cause bottoms to be selected from a product group consisting of only their products. Further, the users who consider purchasing bottoms to be combined with tops of products available from their company also include providing sources having an intention to cause bottoms to be selected from a product group consisting of only their products and products with a specific brand.

In the technologies described in JP2008-282098A and JP2010-39592A, it is not possible to reflect an intention of the providing source in a product group to be presented to the user for selection of a product, and to sufficiently satisfy sales strategies or requirements of the providing source of products.

The present invention has been made in view of such circumstances, and its object is to provide a coordination server, a coordination system, and a coordination method capable of reflecting an intention of a providing source of a first product in search for a second product to be combined with the first product.

A coordination server that is an aspect of the present invention is a coordination server that performs coordination of a second product for a first product, and comprises: a coordination condition acquisition unit that acquires a coordination condition that is information on a product that is combinable with the first product, which is set by a providing source of the first product; and a product group generation unit that generates a first product group consisting of candidate products of the second product on the basis of the coordination conditions.

According to this aspect, it is possible to generate a "first product group consisting of candidate products of the second product" in which an intention of a providing source of the first product is reflected. In this aspect, since the providing source of the first product becomes a person who sets coordination conditions and sets the coordination conditions, an intention of the providing source is considered to have been reflected in the coordination condition. A providing source of the first product who is a person setting coordination conditions is, for example, an EC site (site operator) or a supplier that handles the first product. Further, for example, in a case where coordination of a product is performed, a first selected product can be a "first product", and a product selected as a coordination target to be combined with the "first product" can be a "second product".

Preferably, the coordination condition is determined on the basis of at least one of an unlimited condition indicating that there is no limitation on a combination, a providing source condition indicating combinability with a product provided by a specific providing source, a brand condition indicating combinability with a product with a specific brand, a price condition indicating combinability with a product of specific price, or a stock condition indicating a stock state of a product.

According to this aspect, the first product group consisting of candidate products of the second product is generated on the basis of the coordination condition including at least one of "an unlimited condition indicating that there is no limitation on a combination", "a providing source condition indicating combinability with a product provided by a specific providing source", "a brand condition indicating combinability with a product with a specific brand", "a price condition indicating combinability with a product of specific price", or "a stock condition indicating a stock state of a product". Accordingly, in this aspect, it is possible to provide a user with a product group in which an intention of a providing source of the first product who is a person setting coordination conditions is reflected.

Preferably, the coordination condition acquisition unit acquires providing source information indicating a providing source of the first product, and acquires the coordination condition on the basis of the providing source information by referring a condition table defining the providing source information and the coordination condition set by the providing source in association with each other.

According to this aspect, the providing source information regarding the first product is acquired, and the condition table is referred to and coordination condition is acquired on the basis of the providing source information. Thus, the first product group consisting of the candidate products of the second product may be generated on the basis of the coordination condition acquired from the providing source information.

Preferably, the coordination server further comprises: a condition storage unit that is connected to the coordination condition acquisition unit and stores the condition table; a condition rewriting unit that is connected to the condition storage unit and performs rewriting of the coordination condition set by the providing source, which is defined in the condition table; and a change instruction reception unit that is connected to the condition rewriting unit and receives an instruction to change the coordination condition, in which the condition rewriting unit rewrites the coordination condition defined in the condition table stored in the condition storage unit according to the change instruction received by the change instruction reception unit.

According to this aspect, since the coordination condition can be changed according to the change instruction received by the change instruction reception unit, an intention of the providing source of the first product who is a person setting coordination conditions can be more flexibly reflected in the coordination conditions.

Preferably, the coordination server further comprises a product database in which information on a plurality of products including the first product and the second product is stored, in which the product group generation unit generates a first product group consisting of candidate products of the second product on the basis of the coordination condition from the products stored in the product database.

According to this aspect, since the coordination server includes the product database in which the information on product is stored, it is possible to provide a user with a product selected from among the products stored in the product database.

Preferably, the product group generation unit generates a second product group consisting of candidate products of the second product on the basis of a candidate product condition that is information on a product that is combinable with the candidate products of the second product, which is set by a providing source of candidate products of the second product.

According to this aspect, since the second product group is generated on the basis of the candidate condition set by a providing source of the second candidate product, it is possible to provide the user with the product group in which an intention of a providing source of the second candidate products is reflected.

A coordination system that is another aspect of the present invention is a coordination system in which the coordination server and a client terminal are connected over a network, in which the coordination condition acquisition unit of the coordination server acquires the coordination condition on the basis of first product sales information transmitted from the client terminal over the network, and the first product sales information includes first product specifying information for specifying the first product, and at least one of the coordination condition or providing source information indicating a providing source of the first product.

According to this aspect, the coordination condition is obtained on the basis of the first product sales information transmitted from the client terminal, and the first product group generated on the basis of the coordination condition is provided to the user. Thus, in this aspect, the first product group can be generated in the coordination server on the basis of the information from the client terminal, and the product group can be provided to the user.

Preferably, the client terminal comprises: a display unit; an input instruction reception unit that receives an input instruction from a user; a terminal communication unit that performs transmission and reception of data to and from the coordination server over a network; and a terminal controller connected to the display unit, the input instruction reception unit, and the terminal communication unit, the terminal controller of the client terminal acquires first product candidate information indicating a plurality of candidate products of the first product via the terminal communication unit, displays information on a plurality of candidate products of the first product on the display unit on the basis of the first product candidate information, and specifies a product selected by a user from among the plurality of candidate products of the first product as the first product on the basis of an input instruction received by the input instruction reception unit, and the first product specifying information indicates the first product specified by the terminal controller.

According to this aspect, the first product is specified by the user in the client terminal, and the first product sales information based on the specified first product is transmitted to the coordination server. Thus, in this aspect, it is possible to provide the user with the "first product group consisting of the candidate products of the second product" generated on the basis of the first product selected and specified by the user in the client terminal.

Preferably, a first product providing system is connected to the network, and the first product candidate information is transmitted from the first product providing system to the terminal controller via the network and the terminal communication unit.

According to this aspect, since the first product candidate information is provided from the first product providing system, the first product can be caused to be selected by the user from the first product group held in the first product providing system.

Preferably, the client terminal comprises: an input instruction reception unit that receives an input instruction from a user; a terminal communication unit that performs transmission and reception of data to and from the coordination server over the network; and a terminal controller connected to the input instruction reception unit and the terminal communication unit, the terminal controller of the client terminal acquires recommended product information indicating a recommended product via the terminal communication unit, and specifies the recommended product as the first product on the basis of the recommended product information, and the first product specifying information indicates the first product specified by the terminal controller.

According to this aspect, in the client terminal, the recommended product is specified as the first product, and the first product sales information based on the specified first product is transmitted to the coordination server. Thus, in this aspect, it is possible to provide the user with the "first product group consisting of the candidate products of the second product" generated on the basis of the first product (recommended product).

Preferably, the client terminal comprises: an input instruction reception unit that receives an input instruction from a user; a terminal communication unit that performs transmission and reception of data to and from the coordination server over the network; and a terminal controller connected to the input instruction reception unit and the terminal communication unit, the terminal controller of the client terminal acquires recommended product information indicating a recommended product via the terminal communication unit, the first product specifying information includes the recommended product information, and the coordination condition acquisition unit of the coordination server specifies the recommended product indicated by the recommended product information included in the first product specifying information as the first product.

According to this aspect, in the coordination server, the recommended product is specified as the first product, the coordination condition is acquired on the basis of the specified first product, and the first product group is generated on the basis of the coordination condition. Thus, in this aspect, it is possible to provide the user with "the first product group consisting of the candidate products of the second product" generated on the basis of the first product (recommended product) specified in the coordination server.

Preferably, a first product providing system is connected to the network, and the recommended product information is transmitted from the first product providing system to the terminal controller via the network and the terminal communication unit.

According to this aspect, since the recommended product information is transmitted from the first product providing system, the first product is selected on the basis of the recommended product information that the first product providing system has.

Preferably, the coordination server further comprises: a system communication unit that performs communication with the client terminal over the network; and an image acquisition unit that acquires a product image of the candidate product of the second product constituting the first product group, and transmits the product image of the candidate product of the second product to the client terminal via the system communication unit and the network, the client terminal comprises: a display unit; an input instruction reception unit that receives an input instruction from a user; a terminal communication unit that performs transmission and reception of data to and from the coordination server over the network; and a terminal controller connected to the display unit, the input instruction reception unit, and the terminal communication unit, and the terminal controller displays the product image of the candidate product of the second product received via the network and the terminal communication unit on the display unit.

According to this aspect, the product image of the first product group consisting of the candidate products of the second product generated by the coordination server is displayed on the display unit of the client terminal. Thus, in this aspect, in the client terminal, it is possible to provide the user with the product images of the candidate products of the second product.

Preferably, the coordination server further comprises: a system communication unit that performs transmission and reception of data to and from the client terminal over the network; a second product specifying unit that specifies the second product from among the candidate products of the second product constituting the first product group; and an image acquisition unit that acquires a product image of the second product specified by the second product specifying unit, and transmits the product image of the second product to the client terminal via the system communication unit and the network.

According to this aspect, the second product is specified in the coordination server, and the specified product image of the second product is transmitted to the user terminal. Thus, in this aspect, it is possible to provide the user with the second product according to the coordination conditions.

Preferably, the client terminal comprises: a terminal communication unit that performs transmission and reception of data to and from the coordination server over the network; an image reading unit capable of reading a first product specifying image; and an image analysis unit that analyzes the first product specifying image read by the image reading unit to acquire first product sales information and transmits the first product sales information to the coordination server through the terminal communication unit and the network.

According to this aspect, in the client terminal, the first product specifying image is read, the first product sales information is acquired on the basis of the read first product specifying image, and the first product sales information is transmitted to the coordination server. Thus, in this aspect, it is possible to realize performing of the coordination for specifying the first product using the first product specifying image. The "first product specifying image" is an image capable of specifying the first product through reading of the image.

Preferably, the first product specifying image is an image based on a QR code (registered trademark), a bar code, or an Augmented Reality marker.

According to this aspect, the first product sales information is acquired based on the QR code (registered trademark), the bar code, or the Augmented Reality marker.

Preferably, the terminal controller determines display or non-display in the display unit of a coordinatable image indicating that the first product can be coordinated according to the coordination condition.

According to this aspect, the display or non-display of the coordinatable image is switched. Thus, it is possible to control providing of a service regarding coordination to the user.

A coordination method that is still another aspect of the present invention is a coordination method of performing coordination of a second product for a first product, and comprises: a coordination condition acquisition step of acquiring a coordination condition that is information on a product that is combinable with the first product, which is set by a providing source of the first product; and a product group generation step of generating a first product group consisting of candidate products of the second product on the basis of the coordination conditions.

According to the present invention, the coordination conditions are set by the providing source of the first product, and the first product group consisting of the candidate products of the second product is generated on the basis of the coordination conditions. Therefore, in search for the second product to be combined with the first product, it is possible to accurately reflect an intension of the providing source of the first product.

### BRIEF DESCRIPTION OF THE DRAWINGS

Fig. 1 is a conceptual diagram of a coordination system.
Fig. 2 is a block diagram illustrating an example of a functional configuration of a coordination server.
Fig. 3 is a conceptual diagram of a data structure regarding a coordination condition table.
Fig. 4 is a conceptual diagram of a data structure of data regarding a product.
Fig. 5 is a conceptual diagram illustrating a relationship between a sensitivity space and a physical measurement space.
Fig. 6 is a conceptual diagram of a data structure regarding a coordination condition table.
Fig. 7 is a conceptual diagram illustrating an appearance of a client terminal.
Fig. 8 is a conceptual diagram illustrating that a coordination room is displayed on a display unit of a client terminal.
Fig. 9 is a block diagram illustrating a functional configuration example of the client terminal.
Fig. 10 is a flow diagram illustrating an operation of a coordination system.
Fig. 11 is a flow diagram illustrating an operation of the coordination system.
Fig. 12 is a flow diagram illustrating an operation of the coordination system.
Fig. 13 is a flow diagram illustrating an operation of the coordination system.
Fig. 14 is a block diagram illustrating a functional configuration example of a coordination server.
Fig. 15 is an operation flow diagram of a coordination system.
Fig. 16 is a block diagram illustrating a functional configuration example of a client terminal.

### DESCRIPTION OF THE PREFERRED EMBODIMENTS

Hereinafter, specific embodiments of a coordination server, a coordination system, and a coordination method according to the present invention will be described with reference to the accompanying drawings. In the following embodiments, an example in which a product is "an apparel and, particularly, clothing" will be described, but the present invention is not limited thereto. The present invention is applied to a case where any other products are coordinated.

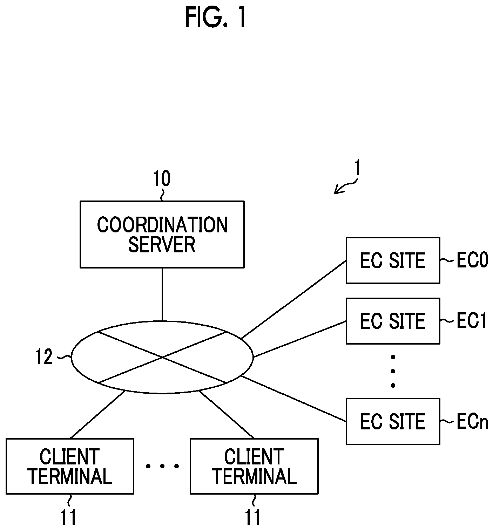

Fig. 1 is a conceptual diagram of a coordination system 1 according to the present invention. The coordination system 1 according to this embodiment includes a coordination server 10, client terminals 11 of a plurality of general consumers (users), and a plurality of electronic commerce sites (EC sites) (first product providing system) EC0 to ECn, which are connected over a network 12 such as the Internet.

The coordination server 10 corresponds to a server in the coordination system 1, and the client terminal 11 corresponds to a client in the coordination system 1. Further, the EC site corresponds to a server in the coordination system 1. The coordination server 10 proposes a coordinated product that is an appropriate combination (coordination) of two or more of products to a user or performs a service of introducing products handled at the EC sites EC0 to ECn to the user to provide an affiliating site for receiving a reward for a service from operators of the EC sites EC0 to ECn.

The client terminal 11 is a terminal which is operated when a user searches for a product such as an apparel (including a coordination product) and is, for example, a portable terminal such as a smart phone or a tablet device, or a personal computer.

The EC sites EC0 to ECn have a function of providing information on a product (for example, a product image, a brand, a stock, price, size, a recommended product, or purchasing information) to the coordination server 10 or providing information on products handled at the EC site to the client terminal 11 accessed via the coordination server 10 or the client terminal 11 that accessed without via the coordination server 10. Further, a plurality of EC sites may be connected to the network 12 as illustrated in Fig. 1, or one EC site may be connected to the network 12.

### (First embodiment)

A first embodiment of the present invention will be described.

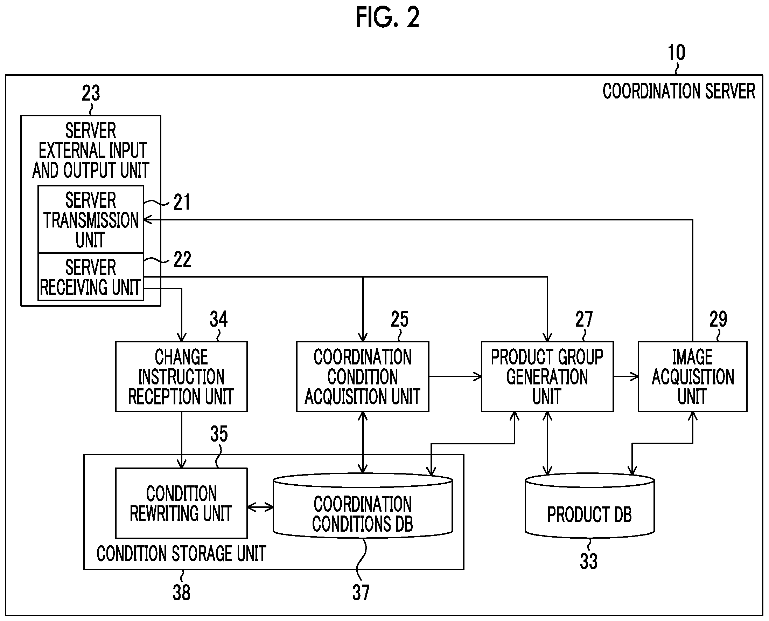

Fig. 2 is a block diagram illustrating a functional configuration example of the coordination server 10 of the coordination system 1.

The coordination server 10 mainly includes a server external input and output unit (system communication unit) 23, a change instruction reception unit 34, a coordination condition acquisition unit 25, a condition storage unit 38 (condition rewriting unit 35, a coordination condition database (coordination conditions DB) 37), a product group generation unit 27, an image acquisition unit 29, and a product database (product DB) 33. The server external input and output unit 23 includes a server transmission unit 21 and a server receiving unit 22.

The coordination condition acquisition unit 25 acquires a coordination condition. Here, the coordination condition is a condition that is referred to in a case where a first product group consisting of candidate products of a second product is produced, and can limit selection of candidate products of the second product.

In a case where the coordination condition acquisition unit 25 directly acquires the coordination conditions from the client terminal 11, the coordination condition acquisition unit 25 transmits the acquired coordination conditions to the product group generation unit 27. The coordination conditions that the coordination condition acquisition unit 25 directly acquire from the client terminal 11 via the server receiving unit 22 are assumed to be, for example, the following conditions. In a case where the providing source of the first product is company A, for example, a condition "only products handled by company A can be candidate products of the second product", "only products handled by companies A, B, and C can be candidate products of the second product", "only products handled by company A, products with brand α, and products with brand β can be candidate products of the second product", "only products handled by company A and products in a specific price range can be candidate products of the second product", "only products handled by company A and products of which the number of stocks is equal to or greater than a specific number can be candidate products of the second product", or "all products can be candidate products of the second product" (however, at least one of the products includes the product handled by company A) can be the coordination condition.

Further, when the coordination condition acquisition unit 25 has acquired the providing source information, the coordination condition acquisition unit 25 acquires the coordination condition from a coordination condition database 37. Here, the providing source information is not particularly limited as long as the providing source information is information capable of specifying a providing source of a first product. For example, the source information may be an identification number assigned to the providing source or a name of the providing source.

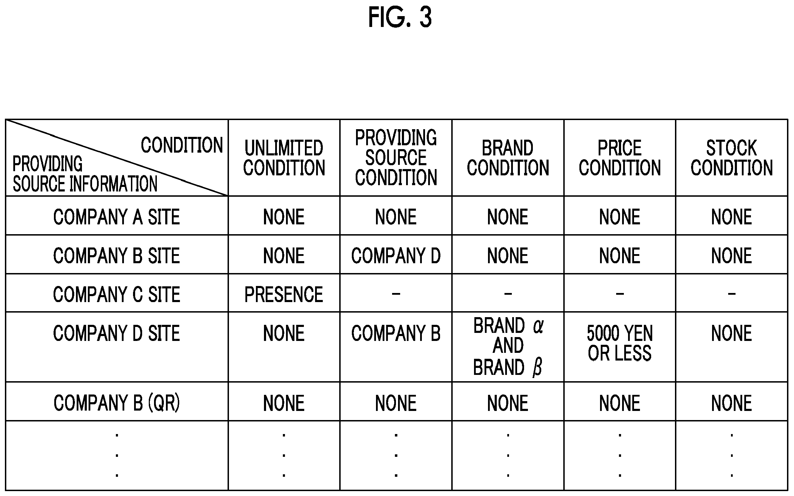

Fig. 3 is a conceptual diagram of a data structure regarding a coordination condition table stored in the coordination condition database 37. The coordination condition acquisition unit 25 can acquire the coordination condition by referring to the coordination condition table stored in the coordination condition database 37. As illustrated in Fig. 3, a "unlimited condition" indicating no limitation on the combination, a "providing source condition" indicating combinability with a product provided by a specific providing source, a "brand condition" indicating combinability with a product with a specific brand, a "price condition" indicating combinability with a product of a specific price, and a "stock condition" indicating a stock state of a product are included in the coordination conditions defined in the coordination condition table, and each condition is associated with the providing source information.

That is, in a case where the coordination condition acquisition unit 25 acquires providing source information indicating that "the first product is a product handled at a company A site", the coordination condition acquisition unit 25 acquires a coordination condition "only products handled in company A (that is the same providing source as that of the first product) can be candidate products of the second product" since all the conditions in the coordination condition table of Fig. 3 is "None". Further, in a case where the coordination condition acquisition unit 25 acquires providing source information "the first product is a product handled at a company B site", the coordination condition acquisition unit 25 acquires a coordination condition "only products handled in company B and products handled in company D can be candidate products of the second product" since the providing source condition in the coordination condition table of Fig. 3 is "D company".

Further, in a case where the coordination condition acquisition unit 25 acquires providing source information "the first product is a product handled at a company C site", the coordination condition acquisition unit 25 acquires a coordination condition "all products can be candidate products of the second product" since the unlimited condition in the coordination condition table of Fig. 3 is "Presence". Further, in a case where the coordination condition acquisition unit 25 acquires providing source information "the first product is a product handled at a company D site", the coordination condition acquisition unit 25 acquires a coordination condition "products handled in company D, products handled in company B, products with brand α, products with brand β, and products of 5000 yen or less can be candidate products of the second product" since in the coordination condition table of Fig. 3, the providing source condition is "company B", the brand condition is "brands α and β", and price condition is "5000 yen or less". Further, in a case where the coordination condition acquisition unit 25 acquires providing source information "the first product is a product handled in company B" through a QR code (registered trademark) which is the first product specifying image, the coordination condition acquisition unit 25 acquires the coordination condition "only products handled in company B can be candidate products of the second product" since all of the conditions in the coordination condition table of Fig. 3 is "None". A case where information is acquire through the QR code (registered trademark) will be described below. In the case of Fig. 3, the condition (set) described in the coordination condition table has been described as a sum set, but the present invention is not limited thereto. For example, the condition (set) serving as the sum set may be described in the coordination condition table. Further, a candidate product condition to be described below may be included in the coordination condition database.

The product group generation unit 27 (see Fig. 2) is connected to the product database 33, and generates a first product group consisting of candidate products of the second product. Specifically, the product group generation unit 27 acquires the coordination condition from the coordination condition acquisition unit 25 and selects a product satisfying the coordination condition as a candidate product of the second product from among the products stored in the product database 33 to produce a first product group.

Further, the product group generation unit 27 may generate a second product group on the basis of the information (candidate product condition) on a product that is combinable with the candidate product of the second product set by the providing source of the candidate product of the second product. That is, the providing source of the candidate products of the second product may set the information (candidate product condition) on a product that is combinable with the product as illustrated in Fig. 3, and the second product group may be generated on the basis of the candidate product conditions and the coordination conditions. More specifically, in a case where the first product is tops (providing source is company B) and the second product is bottoms, bottoms satisfying the coordination conditions set by company B that is a providing source of tops and satisfying the candidate product conditions set by a providing source of bottoms is selected in the product group generation unit 27. When the coordination conditions illustrated in Fig. 3 are candidate product conditions, bottoms of the product of company D is selected as a second candidate product since a product of company B is combinable (coordinatable) with a product of company D and the product of company D is combinable (coordinatable) with a product of company B. For example, the candidate product conditions are acquired from the coordination condition database 37 by the product group generation unit 27.

Further, even when the coordination is performed on three or more products, the product group generation unit 27 may generate a second product group as described above. That is, the product group may consist of products that satisfy all of conditions (a coordination condition and a candidate product condition) that are set by a providing source of each product to be coordinated. The candidate product condition is a condition regarding a combinable product similar to the coordination conditions, but the coordination condition and the candidate product condition may not necessarily match or may not match. For example, the candidate product condition may be a condition in which a limitation is relaxed as compared with the coordination condition.

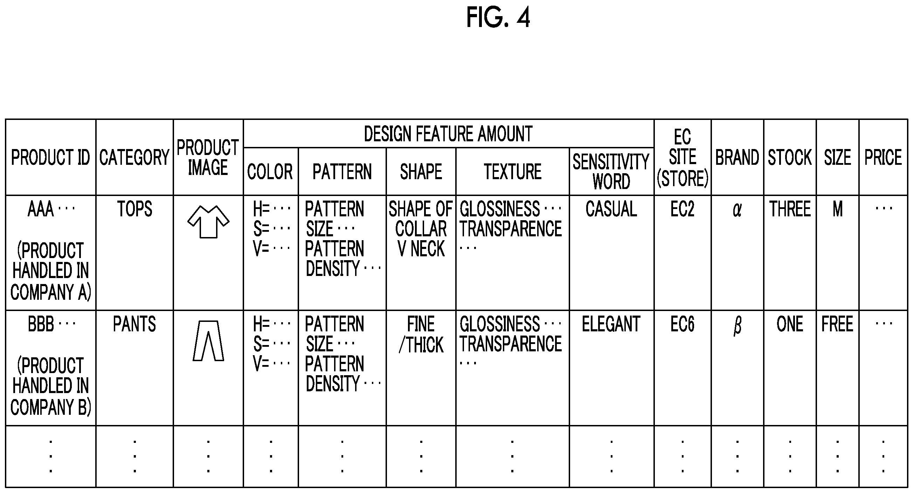

Fig. 4 is a data structure conceptual diagram of data regarding the product to be stored in the product database 33. Information on a plurality of products including the first product and the second product is stored in the product database 33. Further, the data (information) regarding the product stored in the product database 33 may be acquired from, for example, one or a plurality of EC sites. When the product database 33 acquires the data regarding products of the plurality of EC sites, the product database 33 can provide the user with selection of products crossing the ECs.

As illustrated in Fig. 4, information on "product ID", "category", "product image", "design feature amount", "EC site", "brand", "stock", "size", and "price" is registered as product information in the product database 33. Here, "product ID" is unique identification information of each product, and a different product ID may be applied if a providing source (a supplier, an EC site, or a retailer) is different for same product. Therefore, a providing source that provides a product may be recognized using the product ID.

The "category" is a category of the product. Examples of the category include tops, pants (bottoms), hats, and shoes, which are useful information when combined (coordinated) with other products. The "product image" is data of an image obtained by imaging a product.

The "design feature amount" includes, for example, a physical amount of the product image (information on color of the product, information on a pattern of the product, information on a shape of the product, and information on a texture of the product), and a sensitivity word associated with the physical amount. The information on "color" obtained by performing image analysis on the product image is indicated by H (hue), S (saturation), V (brightness), and RGB (red, green, blue).

The design feature amount regarding the "pattern" is indicated by, for example, a pattern size or a pattern density. The pattern size is a size of the pattern that the product has, and is indicated by, for example, an area. Further, the pattern density indicates how much the pattern is densely arranged in a certain range and is indicated like, for example, "density is high" and "density is low".

The information on the "shape" is information on a characteristic shape of a product or a shape capable of identifying a product. The information on the shape is, for example, information such as a shape of a collar, slender, or comfortable. The information on the "texture" is, for example, glossiness or transparence, and is information obtained by performing image analysis on a product image.

Next, the information on the sensitivity word associated with the physical amount will be described. First, a relationship between the physical amount and the sensitivity word will be described.

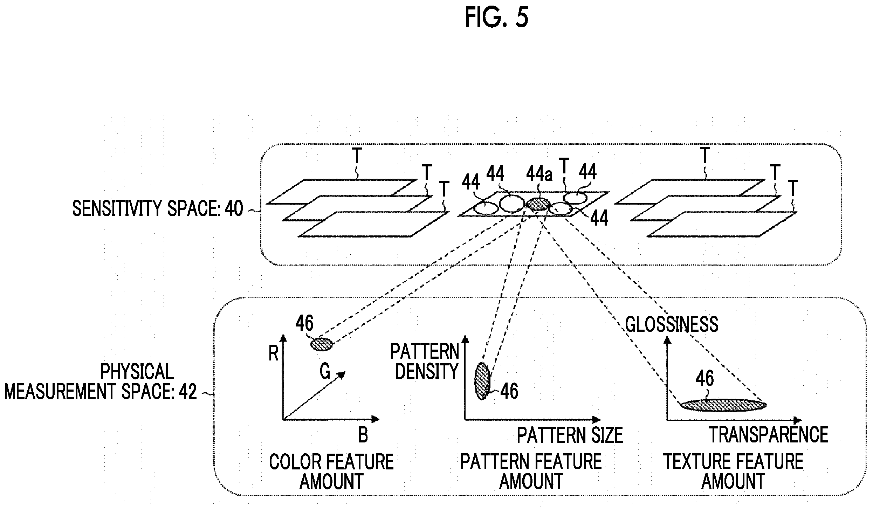

Fig. 5 is a conceptual diagram illustrating a relationship between a sensitivity space 40 and a physical measurement space 42. Conversion from the physical measurement space 42 into the sensitivity space 40 is performed by a conversion table T. That is, the conversion table T defines a region in the physical measurement space 42 (hereinafter referred to as a "physical amount region 46") corresponding to a region in the sensitivity space 40 (hereinafter referred to as a "sensitivity region 44"). As illustrated in Fig. 5, there is a sensitivity region 44 to be allocated to each sensitivity word in the sensitivity space 40, and there is a physical amount region 46 in the physical measurement space 42 corresponding to each sensitivity region 44. In the example illustrated in Fig. 5, in a case where a sensitivity word occupies the sensitivity region 44a, a specific physical amount region 46 in the physical measurement space 42 regarding a design feature amount of color, a design feature amount of a pattern, and a design feature amount of texture is associated with the sensitivity region 44a (see a hatched portion in Fig. 5).

The conversion table T defines an association between the sensitivity region 44 indicated in the sensitivity space 40 and the physical amount region 46 indicated in the physical measurement space 42, and is used to convert the data in the sensitivity space 40 into data in the physical measurement space 42.

In the example illustrated in Fig. 5, a "color feature amount defined by RGB (red, green, and blue) data", a "pattern feature amount defined by a pattern density and a pattern size", and a "texture feature amount defined by glossiness and transparence" are used as a reference for determining the physical amount region 46 in the physical measurement space 42, but the present invention is not limited thereto.

Information on the sensitivity word associated with the physical amount of the product image as described above is registered in the product database 33. That is, a sensitivity word obtained using the conversion table T from the physical amount obtained through image analysis of the product image is registered for each product in the product database 33.

Returning to Fig. 4, "EC site (store)", "brand", "stock", "size", and "price" for a product are registered in the product database 33. The product information is not limited to that illustrated in Fig. 4, and various other information on the product may be registered as product information in the product database 33.

The image acquisition unit 29 (see Fig. 2) acquires an image of the first product group consisting of the candidate products of the second product generated by the product group generation unit 27. The image acquisition unit 29 transmits the acquired image of the candidate product of the second product to the client terminal 11 via the server transmission unit 21. For example, the image acquisition unit 29 acquires the product image stored in the product database 33 on the basis of the product ID of the candidate product of the second product generated by the product group generation unit 27. Thereafter, the image acquisition unit 29 transmits the acquired product image to the client terminal 11 via the server transmission unit 21.

The change instruction reception unit 34 receives an instruction to change the coordination condition. Specifically, the change instruction reception unit 34 receives an instruction to change the coordination condition transmitted from the client terminal 11 or the EC site (first product providing system), via the server receiving unit 22. The change instruction reception unit 34 transmits the received instruction to change the coordination condition to the condition rewriting unit 35.

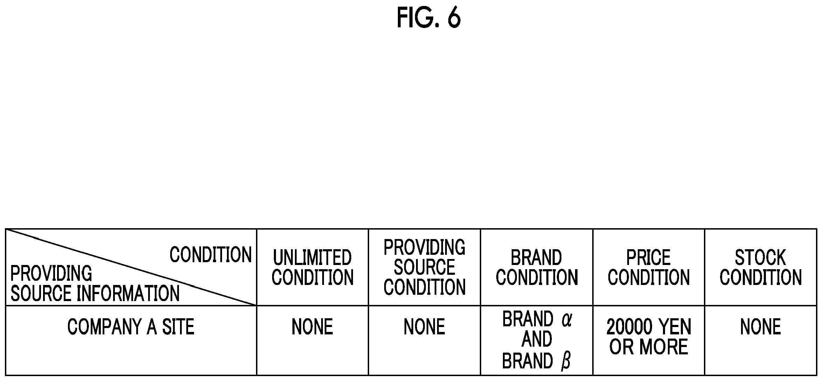

The condition rewriting unit 35 rewrites the coordination condition stored in the coordination condition database 37 on the basis of the received instruction to change the coordination condition. For example, the condition rewriting unit 35 rewrites the coordination conditions of company A described in Fig. 3 into the conditions as illustrated in Fig. 6. That is, the condition rewriting unit 35 changes a coordination condition "the first product is a product that is handled in a company A site" into "a product handled in company A, a product with brand α, a product with brand β, and a product of 20000 yen or more can be candidate products of the second product" on the basis of the change instruction transmitted from the change instruction reception unit 34. Further, the condition rewriting unit 35 can change the coordination conditions during a certain period of time, and undo the coordination conditions after the period of time.

Next, the client terminal 11 will be described.

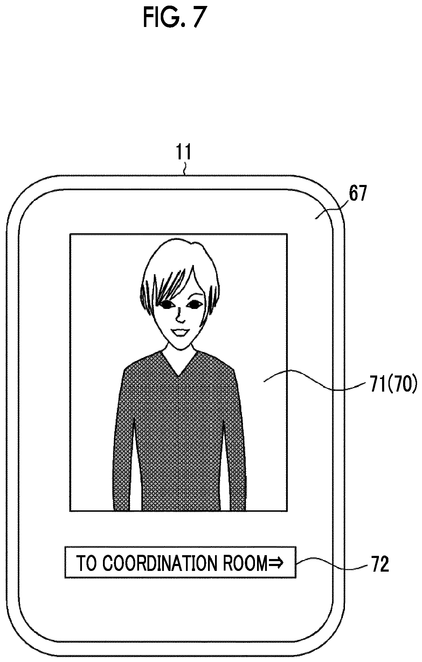

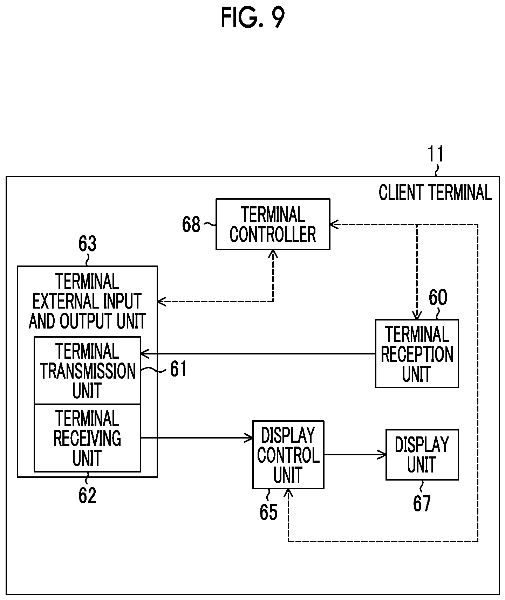

Fig. 7 is a conceptual diagram illustrating an appearance of the client terminal 11. The client terminal 11 includes a display unit 67 on a front, and a touch panel is installed on the display unit 67. The touch panel functions as the terminal reception unit 60 (see Fig. 9).

A product image 71 of the first product or a product image 70 of a candidate product of the first product is displayed on the display unit 67. For example, a plurality of product images 70 of candidate products of the first product can be displayed on the display unit 67, and the user specifies the first product from among the candidate products of the first product by referring to the plurality of product images 70 of the candidate products of the first product. Further, when the first product is specified, the product image 71 of the first product is displayed on the display unit 67.

Further, a coordinatable image 72 indicating that the specified first product can be coordinated is displayed on the display unit 67. If the coordinatable image 72 is selected by the user through the touch panel (terminal reception unit 60), the first product sales information is transmitted from the client terminal 11 to the coordination server 10. A determination of display and non-display of the coordinatable image 72 is performed by the terminal controller 68. According to the coordination condition of the first product, the coordinatable image 72 is not displayed on the display unit 67, and the first product can be prevented (blocked) from being coordinated with other products. Here, the "first product sales information" includes "first product specifying information" for specifying the first product and further includes at least one of "coordination condition" or "providing source information indicating a providing source of the first product".

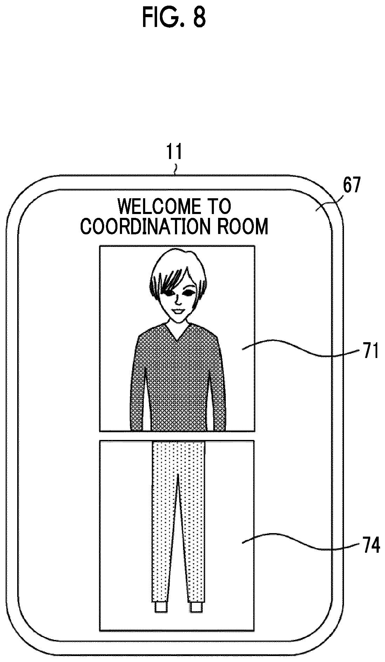

Fig. 8 is a conceptual diagram illustrating that a coordination room is displayed on the display unit 67 of the client terminal 11. In the coordination room, a product image 71 of the first product and a product image 74 of the second product are displayed side by side on the display unit 67, and the user can examine coordination of the first product and the second product by confirming the display of the display unit 67. A display form of the coordination room is not limited to that illustrated in Fig. 8.

Fig. 9 is a block diagram illustrating a functional configuration example of the client terminal 11.

The client terminal 11 of this embodiment mainly includes a terminal reception unit (input instruction reception unit) 60, a terminal external input and output unit (terminal communication unit) 63, a display control unit 65, a display unit 67, and a terminal controller 68. A terminal external input and output unit 63 includes a terminal transmission unit 61 and a terminal receiving unit 62.

The terminal reception unit 60 receives data regarding a user operation in the client terminal 11. Here, the user operation refers to all of operations performed by the user using the client terminal 11. Therefore, the user operation includes, for example, an operation for selection of the first product and an operation for selection of the second product. Further, the user operation includes a product order operation, a coordination operation for performing a combination of a plurality of products, an operation for registration in favorite products, an operation for viewing detailed information of a product, an operation indicating high evaluation of a product, an operation for recommendation to others, and an operation for registration a shopping cart.

In a case where the client terminal 11 is a portable terminal such as a smartphone, buttons or a touch panel provided in the client terminal 11 can be used as the terminal reception unit 60. The user can input data using any scheme via the terminal reception unit 60, may directly input data to the terminal reception unit 60, or may input data by selecting one or more desired items of data from among the plurality of candidates displayed on the display unit 67 using the terminal reception unit 60.

The terminal external input and output unit 63 is connected to the coordination server 10 and the EC sites EC0 to ECn over the network 12, and can perform transmission or reception of data (information) to or from the coordination server 10 and the EC sites EC0 to ECn. The terminal external input and output unit 63 includes the terminal receiving unit 62 that receives data and the terminal transmission unit 61 that transmits data.

The display control unit 65 controls an entire display of the display unit 67. For example, the display control unit 65 displays the product image of the candidate product of the first product received by the terminal receiving unit 62, the product image of the first product, the product image of the candidate product of the second product, and the product image of the second product on the display unit 67.

The terminal controller 68 controls the terminal external input and output unit 63 (the terminal transmission unit 61 and the terminal receiving unit 62), the terminal reception unit 60, and the display control unit 65 to cause the respective units to execute the above-described processes or other processes. The terminal controller 68 also controls respective units (not illustrated) of the client terminal 11.

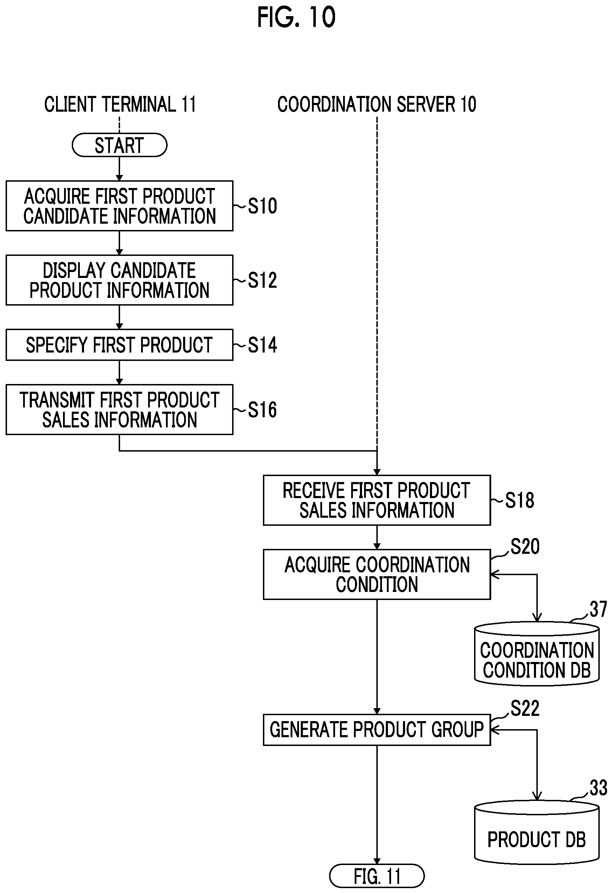

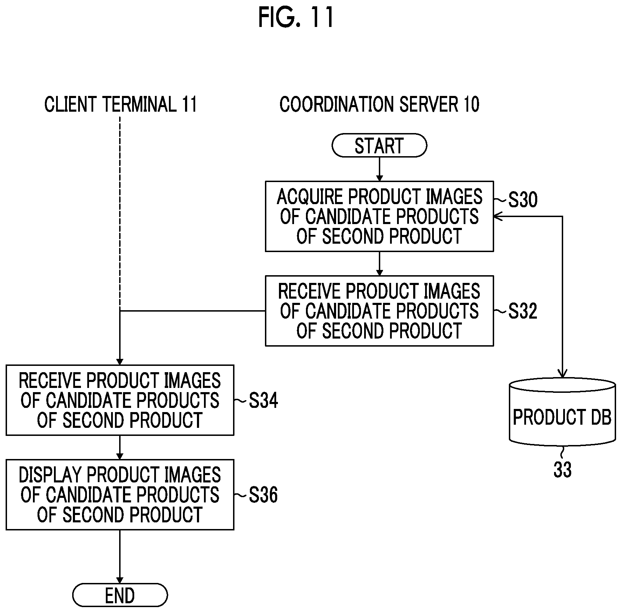

Figs. 10 and 11 are flow diagrams illustrating an operation of the coordination system 1.

First, an operation flow diagram of Fig. 10 will be described. First, the display control unit 65 of the client terminal 11 acquires product candidate information (first product candidate information) indicating a plurality of candidate products of the first product via the terminal receiving unit 62 (step S10). For example, the product candidate information is product images of candidate products of the first product, and is acquired from one or a plurality of EC sites (first product providing system). Further, the product candidate information may be acquired from the product database 33 by the image acquisition unit 29 of the coordination server 10.

Thereafter, the terminal controller 68 displays the acquired product images of the candidate products of the first product on the display unit 67 using the display control unit 65 (step S12). Then, the terminal controller 68 specifies the first product selected by the user via the terminal reception unit 60 from among the plurality of candidates products of the first product displayed on the display unit 67 (step S14). Thereafter, the terminal controller 68 transmits first product sales information including first product specifying information indicating the specified first product to the coordination server 10 via the terminal external input and output unit 63 and the network 12 (step S16).

Thereafter, the coordination condition acquisition unit 25 of the coordination server 10 receives the first product sales information via the server receiving unit 22 (step S18). The coordination condition acquisition unit 25 acquires a coordination condition from the coordination condition database 37 on the basis of the first product sales information (step S20: coordination condition acquisition step). Then, the product group generation unit 27 generates a first product group consisting of candidate products of the second product on the basis of the acquired coordination condition (step S22: product group generation step).

Next, the operation flow diagram of Fig. 11 will be described. The image acquisition unit 29 of the coordination server 10 acquires product images regarding the first product group (product group consisting of candidate products of the second product) generated by the product group generation unit 27 from the product database 33 (step S30). Thereafter, the product images acquired by the image acquisition unit 29 are transmitted to the client terminal 11 via the server transmission unit 21 (step S32).

Then, the terminal controller 68 of the client terminal 11 receives the product images of the candidate products of the second product using the terminal receiving unit 62 (step S34). Then, the terminal controller 68 displays the product images of the candidate products of the second product on the display unit 67 using the display control unit 65 (step S36).

As described above, according to the coordination server 10, the coordination system 1, and the coordination method of this embodiment, since the first product group consisting of the candidate products of the second product is generated on the basis of the coordination condition, it is possible to provide the user with the first product group consisting of the candidate products of the second product in which an intention of a person who sets the coordination condition is reflected.

### (Second embodiment)

In a second embodiment of the present invention, the first product is specified in the client terminal 11 on the basis of recommendation information.

Since a functional configuration of the coordination server 10 and the client terminal 11 of the second embodiment is the same as that described in the first embodiment illustrated in Figs. 2 and 9, description thereof will be omitted.

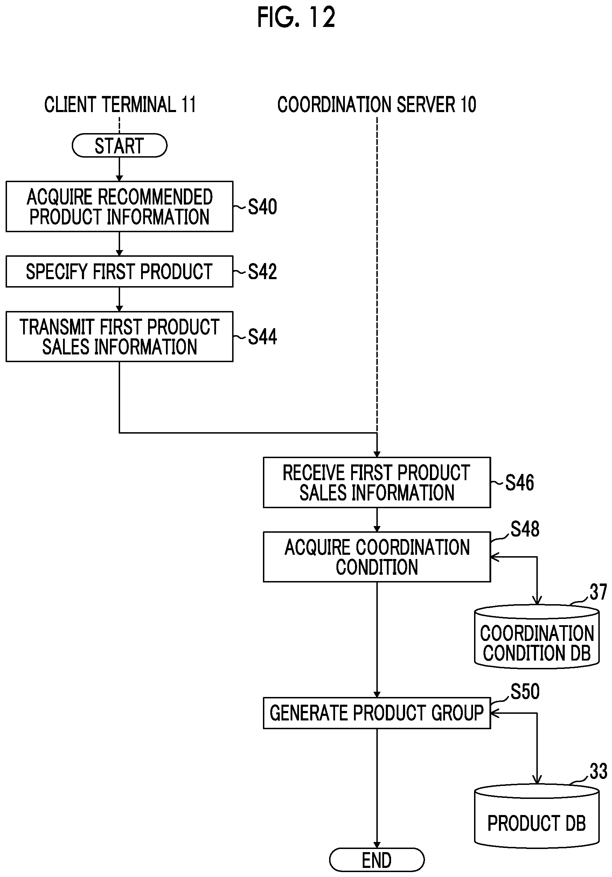

Fig. 12 is a flow diagram illustrating an operation of the coordination system 1.

First, the terminal controller 68 of the client terminal 11 acquires the recommended product information indicating the recommended product using the terminal receiving unit 62 (step S40). Here, the recommended product information is, for example, information on a product set by the providing source in advance and recommended to the user. Further, a product recommended to the user by the recommended product information may be one product or may be a plurality of products. Further, a place at which the recommendation information is set, generated, and stored is not particularly limited, and various places may be adopted. For example, the recommended product information may be transmitted from the first product providing system to the terminal controller 68 via the network 12 and the terminal external input and output unit 63.

Thereafter, the terminal controller 68 specifies the first product on the basis of the recommended product information (step S42). Further, in a case where there is one product that is recommended by the recommended product information, the product that is recommended by the recommended product information is specified by the terminal controller 68. On the other hand, in a case where there are a plurality of products that are recommended by the recommended product information, the user specifies the first product from among the recommended products. The terminal controller 68 transmits first product sales information based on the specified first product via the terminal transmission unit 61 (step S44).

Then, the coordination condition acquisition unit 25 of the coordination server 10 receives the first product sales information via the server receiving unit 22 (step S46). The coordination condition acquisition unit 25 acquires the coordination condition from the coordination condition database 37 on the basis of the first product sales information (step S48). Then, the product group generation unit 27 generates the first product group consisting of the candidate products of the second product on the basis of the acquired coordination condition (step S50).

As described above, in this embodiment, in the client terminal 11, the first product that is a recommended product is specified, and the first product sales information on which the specified first product is based is transmitted to the coordination server 10. Therefore, in this embodiment, it is possible to provide the user with the first product group generated on the basis of the first product that is the recommended product as the candidate product of the second product.

### (Third Embodiment)

In a third embodiment of the present invention, the first product is specified in the coordination server 10 on the basis of recommendation information.

since a functional configuration of the coordination server 10 and the client terminal 11 of the third embodiment is the same as that in the first embodiment illustrated in Figs. 2 and 9, description thereof will be omitted.

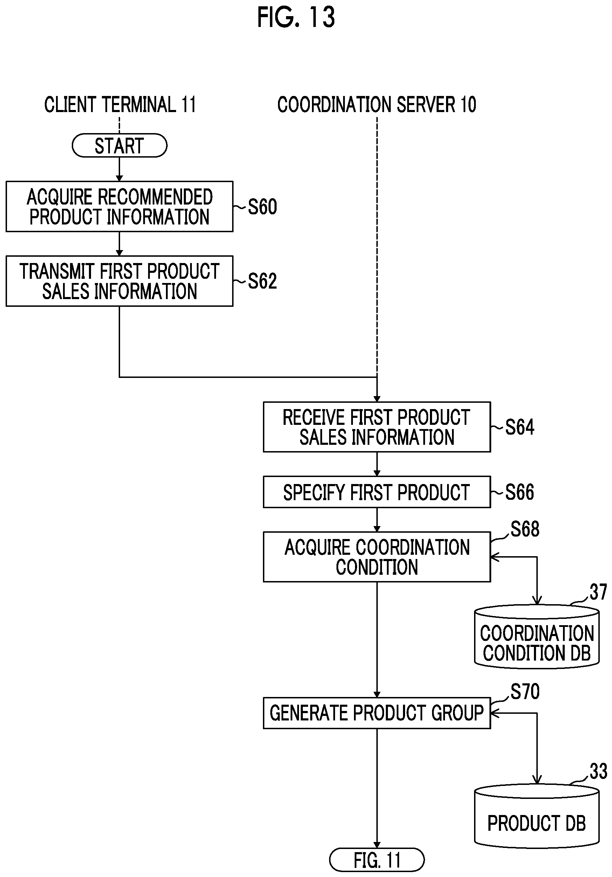

Fig. 13 is an operational flow diagram of a coordination system 1 in a third embodiment.

First, the terminal controller 68 of the client terminal 11 acquires recommended product information indicating a recommended product using the terminal receiving unit 62 (step S60). The terminal controller 68 transmits first product sales information via the terminal transmission unit 61 (step S62). The first product specifying information included in the transmitted first product sales information includes recommended product information.

The coordination condition acquisition unit 25 of the coordination server 10 acquires the first product sales information via the server receiving unit 22 (step S64). Thereafter, the coordination condition acquisition unit 25 of the coordination server 10 specifies the recommended product indicated by the recommended product information included in the first product specifying information as the first product (step S66). The coordination condition acquisition unit 25 acquires the coordination condition from the coordination condition database 37 on the basis of the first product sales information (step S68). Then, the product group generation unit 27 generates the first product group consisting of the candidate products of the second product on the basis of the acquired coordination condition (step S70).

As described above, according to this embodiment, in the coordination server 10, the first product that is a recommended product is specified, the coordination condition is acquired on the basis of the specified first product, and the first product group is generated on the basis of the coordination condition. Thus, in this embodiment, it is possible to provide the user with the first product group generated on the basis of the first product which is the recommended product specified in the coordination server 10 as the candidate product of the second product.

### (Fourth Embodiment)

In a fourth embodiment of the present invention, the second product is specified in the coordination server 10.

Since a functional configuration of the client terminal 11 of the fourth embodiment is the same as that in the first embodiment illustrated in Fig. 9, description thereof will be omitted.

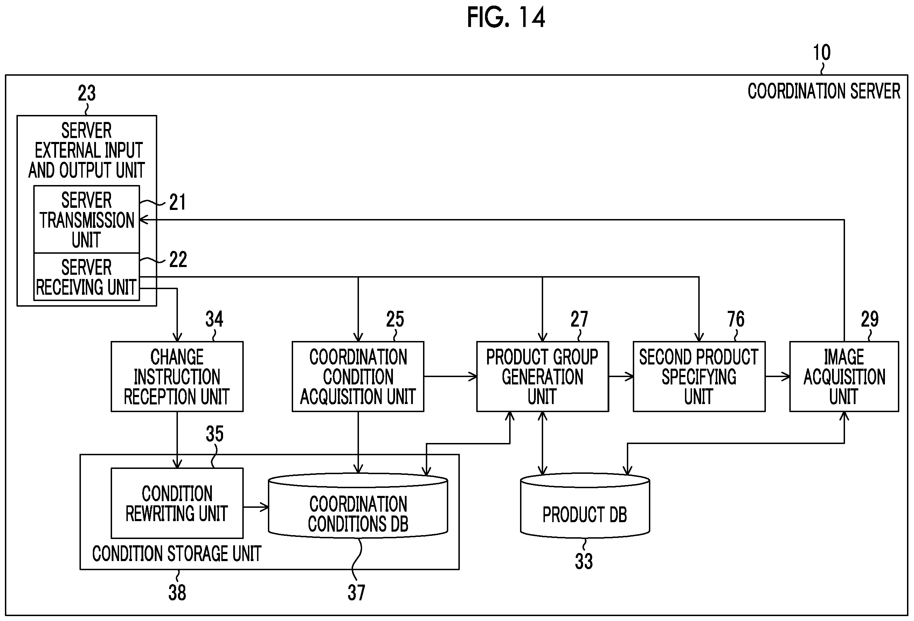

Fig. 14 is a block diagram illustrating a functional configuration example of a coordination server 10 of the fourth embodiment. The same blocks as in the functional configuration example illustrated in Fig. 2 are denoted with the same reference signs and description thereof will be omitted.

In a block diagram illustrating a functional configuration example of the coordination server 10 illustrated in Fig. 14, a second product specifying unit 76 is added, as compared to the block diagram illustrating the functional configuration example illustrated in Fig. 2. Further, the second product specifying unit 76 is disposed between the product group generation unit 27 and the image acquisition unit 29.

The second product specifying unit 76 specifies the second product from candidate products of the second product constituting a first product group. That is, the second product specifying unit 76 specifies the second product in the first product group consisting of the candidate products of the second product generated by the product group generation unit 27. The second product specifying unit 76 can identify the second product on the basis of various information or settings. For example, the second product specifying unit 76 may specify the second product using recommendation information regarding the second product or may specify the second product from a history of use of the coordination server 10 of the user. The history of the coordination server 10 of the user is stored in, for example the product database 33 in connection with the product.

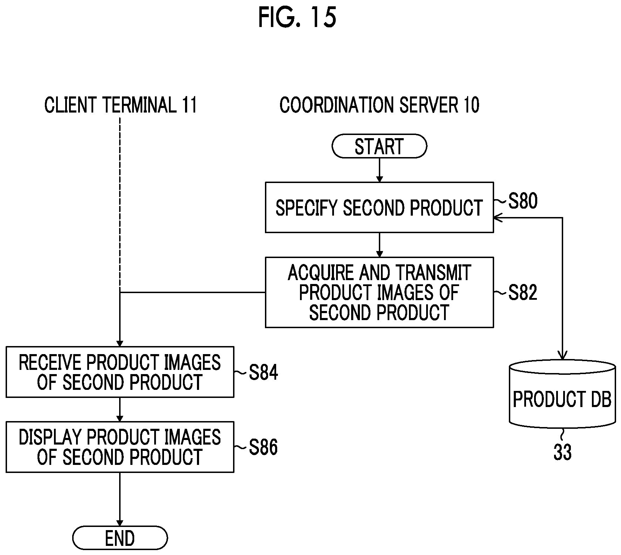

Fig. 15 is an operational flowchart of the coordination system 1 of this embodiment. In Fig. 15, an operation of the coordination system 1 after the product group generation unit 27 generates a first product group is illustrated, similar to Fig. 11.

The second product specifying unit 76 of the coordination server 10 specifies the second product from the first product group generated by the product group generation unit 27 (step S80). Thereafter, the image acquisition unit 29 acquires a product image of the second product from the product database 33 on the basis of the second product specified by the second product specifying unit 76, and transmits the acquired product image to the client terminal 11 (Step S82).

Then, the terminal controller 68 of the client terminal 11 receives the product image of the second product using the terminal receiving unit 62 (step S84). The terminal controller 68 displays the product image of the candidate product of the second product on the display unit 67 using the display control unit 65 (step S86).

As described above, in this embodiment, the second product is specified in the coordination server 10, and the image of the second product is transmitted to the client terminal 11.

### (Fifth Embodiment)

In a fifth embodiment of the present invention, first product sales information is transmitted to the coordination server 10 by reading a first product specifying image such as a QR code (registered trademark), a bar code, or Augmented Reality marker (AR marker).

Since a functional configuration of the coordination server 10 of the fifth embodiment is the same as that in the first embodiment illustrated in Fig. 2, description thereof will be omitted.

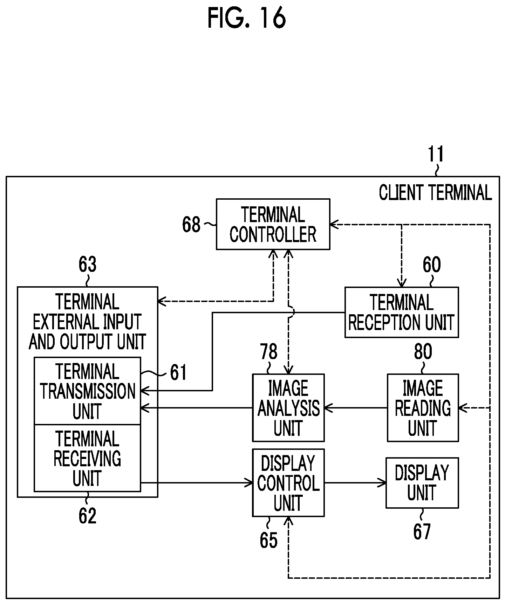

Fig. 16 is a block diagram illustrating a functional configuration example of a client terminal 11 of the fifth embodiment. The same blocks as those in the functional configuration example illustrated in Fig. 9 are denoted with the same reference signs, and description thereof will be omitted.

In the block diagram illustrating the functional configuration of the client terminal 11 illustrated in Fig. 16, an image analysis unit 78 and an image reading unit 80 are added, as compared to the block diagram illustrating the functional configuration example of the client terminal 11 illustrated in Fig. 9. The image analysis unit 78 and the image reading unit 80 are controlled by the terminal controller 68, and the image analysis unit 78 is connected to the terminal transmission unit 61.

The image reading unit 80 can read the first product specifying image. For example, the image reading unit 80 includes a camera or a bar code reader. The first product specifying image read by the image reading unit 80 is transmitted to the image analysis unit 78. The first product specifying image may be added to various places. For example, the first product specifying image may be added to a statement or a receipt or may be added to an advertisement.

The image analysis unit 78 acquires the first product sales information by analyzing the first product specifying image read by the image reading unit 80. Specifically, the image analysis unit 78 acquires a product ID or recommendation information of the first product by analyzing the first product specifying image and acquires the coordination conditions or providing source information. Then, the image analysis unit 78 transmits the acquired first product sales information to the coordination server 10 using the terminal transmission unit 61.

As described above, according to this embodiment, it is possible to realize specifying of the first product using the first product specifying image and performing of the coordination.

Although the examples of the present invention have been described, it is understood that the present invention is not limited to the above-described embodiments and various modifications can be made.

## Claims

1. A coordination server that performs coordination of a second product for a first product, the coordination server comprising:
a coordination condition acquisition unit that acquires a coordination condition that is information on a product that is combinable with the first product, which is set by a providing source of the first product; and
a product group generation unit that generates a first product group consisting of candidate products of the second product on the basis of the coordination conditions.

2. The coordination server according to claim 1,
wherein the coordination condition is determined on the basis of at least one of an unlimited condition indicating that there is no limitation on the combination, a providing source condition indicating combinability with a product provided by a specific providing source, a brand condition indicating combinability with a product with a specific brand, a price condition indicating combinability with a product of specific price, or a stock condition indicating a stock state of a product.

3. The coordination server according to claim 1 or 2,
wherein the coordination condition acquisition unit acquires providing source information indicating a providing source of the first product, and acquires the coordination condition on the basis of the providing source information by referring a condition table defining the providing source information and the coordination condition in association with each other, which is set by the providing source.

4. The coordination server according to claim 3, further comprising:
a condition storage unit that is connected to the coordination condition acquisition unit and stores the condition table;
a condition rewriting unit that is connected to the condition storage unit and performs rewriting of the coordination condition set by the providing source, which is defined in the condition table; and
a change instruction reception unit that is connected to the condition rewriting unit and receives an instruction to change the coordination condition,
wherein the condition rewriting unit rewrites the coordination condition defined in the condition table stored in the condition storage unit according to the change instruction received by the change instruction reception unit.

5. The coordination server according to any one of claims 1 to 4, further comprising:
a product database in which information on a plurality of products including the first product and the second product is stored,
wherein the product group generation unit generates a first product group consisting of candidate products of the second product on the basis of the coordination condition from the products stored in the product database.

6. The coordination server according to any one of claims 1 to 5,
wherein the product group generation unit generates a second product group consisting of candidate products of the second product on the basis of a candidate product condition that is information on a product that is combinable with the candidate products of the second product, which is set by a providing source of candidate products of the second product.

7. A coordination system in which the coordination server according to any one of claims 1 to 6 and a client terminal are connected over a network,
wherein the coordination condition acquisition unit of the coordination server acquires the coordination condition on the basis of first product sales information transmitted from the client terminal over the network, and
the first product sales information includes first product specifying information for specifying the first product, and at least one of the coordination condition or providing source information indicating a providing source of the first product.

8. The coordination system according to claim 7,
wherein the client terminal comprises:
a display unit;
an input instruction reception unit that receives an input instruction from a user;
a terminal communication unit that performs transmission and reception of data to and from the coordination server over the network; and
a terminal controller connected to the display unit, the input instruction reception unit, and the terminal communication unit,
the terminal controller of the client terminal
acquires first product candidate information indicating a plurality of candidate products of the first product via the terminal communication unit,
displays information on a plurality of candidate products of the first product on the display unit on the basis of the first product candidate information, and
specifies a product selected by the user from among the plurality of candidate products of the first product as the first product on the basis of the input instruction received by the input instruction reception unit, and
the first product specifying information indicates the first product specified by the terminal controller.

9. The coordination system according to claim 8,
wherein a first product providing system is connected to the network, and
the first product candidate information is transmitted from the first product providing system to the terminal controller via the network and the terminal communication unit.

10. The coordination system according to claim 7,
wherein the client terminal comprises:
an input instruction reception unit that receives an input instruction from a user;
a terminal communication unit that performs transmission and reception of data to and from the coordination server over the network; and
a terminal controller connected to the input instruction reception unit and the terminal communication unit,
the terminal controller of the client terminal
acquires recommended product information indicating a recommended product via the terminal communication unit, and
specifies the recommended product as the first product on the basis of the recommended product information, and
the first product specifying information indicates the first product specified by the terminal controller.

11. The coordination system according to claim 7,
wherein the client terminal comprises:
an input instruction reception unit that receives an input instruction from a user;
a terminal communication unit that performs transmission and reception of data to and from the coordination server over the network; and
a terminal controller connected to the input instruction reception unit and the terminal communication unit,
the terminal controller of the client terminal acquires recommended product information indicating a recommended product via the terminal communication unit,
the first product specifying information includes the recommended product information, and
the coordination condition acquisition unit of the coordination server specifies the recommended product indicated by the recommended product information included in the first product specifying information as the first product.

12. The coordination system according to claim 10 or 11,
wherein a first product providing system is connected to the network, and
the recommended product information is transmitted from the first product providing system to the terminal controller via the network and the terminal communication unit.

13. The coordination system according to any one of claims 7 to 12,
wherein the coordination server further comprises:
a system communication unit that performs communication with the client terminal over the network; and
an image acquisition unit that acquires a product image of the candidate product of the second product constituting the first product group, and transmits the product image of the candidate product of the second product to the client terminal via the system communication unit and the network,
the client terminal comprises:
a display unit;
an input instruction reception unit that receives an input instruction from a user;
a terminal communication unit that performs transmission and reception of data to and from the coordination server over the network; and
a terminal controller connected to the display unit, the input instruction reception unit, and the terminal communication unit, and
the terminal controller displays the product image of the candidate product of the second product received via the network and the terminal communication unit on the display unit.

14. The coordination system according to any one of claims 7 to 12,
wherein the coordination server further comprises:
a system communication unit that performs transmission and reception of data to and from the client terminal over the network;
a second product specifying unit that specifies the second product from among the candidate products of the second product constituting the first product group; and
an image acquisition unit that acquires a product image of the second product specified by the second product specifying unit, and transmits the product image of the second product to the client terminal via the system communication unit and the network.

15. The coordination system according to claim 7,
wherein the client terminal comprises:
a terminal communication unit that performs transmission and reception of data to and from the coordination server over the network;
an image reading unit capable of reading a first product specifying image; and
an image analysis unit that analyzes the first product specifying image read by the image reading unit to acquire the first product sales information and transmits the first product sales information to the coordination server through the terminal communication unit and the network.

16. The coordination system according to claim 15,
wherein the first product specifying image is an image based on a QR code (registered trademark), a bar code, or an Augmented Reality marker.

17. The coordination system according to claim 8,
wherein the terminal controller determines display or non-display in the display unit of a coordinatable image indicating that the first product can be coordinated according to the coordination condition.

18. A coordination method of performing coordination of a second product for a first product, the coordination method comprising:
a coordination condition acquisition step of acquiring a coordination condition that is information on a product that is combinable with the first product, which is set by a providing source of the first product; and
a product group generation step of generating a first product group consisting of candidate products of the second product on the basis of the coordination conditions.
